# FASCICULE DE BREVET EUROPEEN

(11) **EP 3 717 237 B1**
(45) Date de publication et mention de la délivrance du brevet: **29.11.2023**
(21) Numéro de dépôt: 18827191.0
(22) Date de dépôt: 27.11.2018
(51) Int. Cl.: B32B 15/08, B32B 27/00, B32B 27/08, C08G 65/40, F16L 58/10, F16L 11/04

(54) **UTILISATION DE PEKK POUR LA FABRICATION DE PIÈCES A FAIBLE PERMÉABILITÉ GAZEUSE**
VERWENDUNG VON PEKK ZUR HERSTELLUNG VON TEILEN MIT NIEDRIGER GASDURCHLÄSSIGKEIT
USE OF PEKK FOR PRODUCING PARTS WITH LOW GAS PERMEABILITY

(30) Priorité: 27.11.2017 FR 1761241
(43) Date de publication de la demande: 07.10.2020
(73) Titulaire: Arkema France, 92700 Colombes (FR)
(72) Inventeur: BUSSI, Philippe, 92705 Colombes Cedex (FR); BRULE, Benoît, 27470 Serquigny (FR); PAUL, Clément, 27470 Serquigny (FR)
(74) Mandataire: Arkema Patent
(86) Numéro de dépôt international: PCT/FR2018/053001
(87) Numéro de publication internationale: WO 2019/102165

(56) Documents cités:
- FR-A1- 3 007 033
- FR-A1- 3 046 208
- US-B2- 8 129 462
- US-B2- 8 163 364

## Description

### [Domaine Technique]

La présente invention se rapporte à l'utilisation de poly(éthercétonecétone) (PEKK) comme couche barrière aux gaz, et notamment pour la fabrication de pièces ayant une faible perméabilité aux gaz tels que le CO₂ ou le H₂S. Elle se rapporte plus particulièrement à des conduites utiles pour le transport de fluides pétroliers.

### [Arrière-plan Technologique]

Dans de nombreux domaines, il est nécessaire de disposer de matériaux présentant une faible perméabilité aux gaz, y compris dans des conditions sévères.

Ainsi, lors de l'extraction pétrolière marine, il est nécessaire de transporter les hydrocarbures extraits sur de longues distances et dans des conditions extrêmes. En effet, les conduites utilisées sont susceptibles de subir des pressions excédant 100 bars et des températures élevées au-dessus de 90 °C, voire de 130 °C pendant un temps prolongé. Lors du transport de l'effluent pétrolier dans ces conditions, certains composés gazeux acides présents dans les hydrocarbures transportés comme le H₂S et le CO₂ peuvent, s'ils parviennent jusqu'à des éléments métalliques, engendrer des dégâts de corrosion très coûteux. La corrosion présente un risque sérieux au vu des sollicitations importantes des conduites, par leur propre poids d'une part, et par la haute pression de l'effluent pétrolier et l'environnement marin d'autre part. Le phénomène de migration et de corrosion est encore amplifié à température élevée.

On connait deux types de structures de conduites pour le transport d'effluents pétroliers.

Dans les structures rigides, la conduite peut comporter un tube métallique protégé par une couche intérieure en polymère afin d'améliorer la résistance à la corrosion. La couche intérieure en polymère peut être sous forme d'un liner ou d'un revêtement adhérent, par exemple obtenu par poudrage.

Les structures flexibles peuvent comporter, en allant de l'intérieur vers l'extérieur de la conduite, une carcasse métallique formée de bandes métalliques enroulées en hélice à pas court afin de résister à l'écrasement, une couche polymère extrudé servant de gaine d'étanchéité, une voûte en fils métalliques agrafés afin de résister à la pression interne, une seconde couche polymère extrudé en tant que gaine d'étanchéité, une ou plusieurs nappes d'armures de traction composés de fils métalliques enroulés en hélice selon des angles spécifiques et enfin une gaine externe en polymère servant à protéger la conduite de l'extérieur. Ces structures sont appelées conduites « rough bore ».

Lorsque dans de telles conduites la carcasse est supprimée, on parle de conduites « smooth bore ». Dans ces dernières structures, les effluents pétroliers sont en contact direct avec le polymère de la couche d'étanchéité.

Afin d'augmenter la résistance à la température de ces conduites, le document US 2006/0229395 A1 propose d'utiliser des conduites ou revêtements intérieurs extrudés à partir de polymères thermoplastiques présentant une résistance élevée aux produits chimiques et un point de ramollissement élevé, comme les poly(sulfure de phénylène) (PPS) ou les polyaryléthercétones (PAEK). Le document ne mentionne pas la perméabilité aux gaz de ces polymères.

Le document WO 2014/199033 propose d'ajouter au polymère des oxydes métalliques, alcalins ou alcalin-terreux afin de neutraliser le CO₂ et le H₂S par réaction chimique. Les polymères proposés sont ceux de la famille des copolymères de fluorure de vinylidène. Cette approche présente néanmoins des difficultés de mise en oeuvre et l'ajout de charges tend à diminuer les propriétés mécaniques des polymères, notamment l'allongement à la rupture.

Par ailleurs, la demande de brevet WO 2012/107753 A1 propose de réduire le risque de défaillance d'une conduite pour le transport de fluides sous pression en réduisant leur contrainte résiduelle par une cristallisation du polymère plus lente et donc plus homogène. Parmi les polymères envisagés, le PEKK est mentionné, sans que ce dernier soit exemplifié. Ce document ne mentionne pas non plus la perméabilité aux gaz de ces polymères.

Malgré ces progrès, il reste un besoin de disposer de conduites présentant une faible perméabilité aux gaz, notamment des espèces corrosives comme le CO₂ et au H₂S, y compris dans les conditions de fonctionnement extrêmes. En effet, un polymère plus performant en termes de perméabilité permettrait d'augmenter la durée de vie des conduites et/ou de diminuer l'épaisseur de la couche barrière et de ce fait le poids de la conduite.

### [Résumé de l'invention]

La présente invention repose sur la découverte que certains poly(éthercétonecétone) (PEKK) présentent des propriétés barrière aux gaz très intéressantes, notamment concernant le CO₂ et le H₂S, et en particulier nettement supérieures au poly(étheréthercétone) (PEEK).

Selon un premier aspect, l'invention vise donc l'utilisation de PEKK tel que défini dans la revendication 1 pour diminuer la perméabilité de CO₂ et de H₂S d'une pièce destinée à entrer en contact, de manière directe ou indirecte, avec un effluant pétrolier.

On entend par le terme « pièce en contact avec un effluent pétrolier » désigner une couche en contact direct ou indirect avec ledit effluent.

On entend par le terme « pièce en contact direct avec un effluent pétrolier » notamment désigner une couche interne d'une conduite.

On entend par le terme « pièce en contact indirect avec un effluent pétrolier » désigner notamment une couche laquelle n'est pas la couche interne mais placée autour d'une couche interne, ladite couche interne pouvant être étanche ou non étanche.

De préférence, le PEKK a un degré de cristallinité massique supérieur à 5%.

Le PEKK a un ratio T :I de 35 à 100%, de préférence de 55 à 85 % et plus spécifiquement de 60 à 80 %.

La perméabilité au CO₂ de la pièce à 130°C est de préférence inférieure à 10⁻⁸ cm³ de CO₂ pour une épaisseur de 1 cm et une surface de 1 cm², par seconde et par bar de pression de CO₂, la quantité perméée de CO₂ étant mesurée par GC.

La perméabilité au H₂S de la pièce à 130°C est de préférence inférieure à 10⁻⁸ cm³ pour une épaisseur de 1 cm et une surface de 1 cm², par seconde et par bar de pression de H₂S, la quantité de H₂S perméée de H₂S étant mesurée par GC.

De préférence, la pièce est choisie parmi un tube, une gaine ou couche de pression et un revêtement intérieur, notamment destinés au transport d'un effluent pétrolier.

Selon un deuxième aspect, l'invention vise une conduite, notamment pour le transport d'un effluent pétrolier, comprenant une couche destinée à être en contact avec l'effluent pétrolier, caractérisée en ce que ladite couche destinée à être en contact avec l'effluent pétrolier comprend du PEKK tel que défini à la revendication 6 et présente une perméabilité au CO₂ à 130°C inférieure à 10⁻⁸ cm³ pour une épaisseur de 1 cm et une surface de 1 cm², par seconde et par bar de pression de CO₂, et /ou une perméabilité au H₂S à 130°C inférieure à 10⁻⁸ cm³ pour une épaisseur de 1 cm et une surface de 1 cm², par seconde et par bar de pression de H₂S, la quantité perméée de CO₂ et H₂S étant mesurée par GC, respectivement.

Selon un mode de réalisation, ladite couche destinée à être en contact avec l'effluent pétrolier est une gaine d'étanchéité entourant une carcasse métallique.

Selon un autre mode de réalisation, ladite couche destinée à être en contact avec l'effluent pétrolier est dépourvue de fibres de renfort.

De préférence, ladite couche destinée à être en contact avec l'effluent pétrolier est entourée d'au moins une couche de renfort mécanique.

Selon un mode de réalisation, la au moins une couche de renfort mécanique est réalisée en métal.

Selon un autre mode de réalisation, la au moins une couche de renfort mécanique est réalisée en matériau composite. Dans ce cas, le matériau composite peut par exemple être un composite thermoplastique, notamment à base de polyamide, polyéthylène, notamment PE-RT (acronyme anglais pour « polyethylene raised température »), PEKK ou PVDF, et comprendre par ailleurs des fibres de carbone, notamment des fibres de carbone continues, des fibres d'aramide ou encore des fibres de verre.

Selon un mode de réalisation, la conduite de l'invention comporte en outre une armature métallique flexible. Selon un autre mode de réalisation, la conduite comporte en outre une armature métallique rigide.

Selon un troisième aspect, l'invention vise par ailleurs plusieurs procédés de fabrication d'une conduite selon l'invention.

Lorsqu'il s'agit de fabriquer, notamment réhabiliter, une conduite rigide, le procédé de l'invention comporte les étapes de :
(a) préparer un tube comprenant du PEKK de taille appropriée ; et
(b) insérer ledit tube à l'intérieur d'un tube métallique pour former un liner.

Lorsqu'il s'agit de fabriquer une conduite flexible de type « rough bore », le procédé de l'invention comporte les étapes de :
(a) fournir une carcasse métallique ;
(b) extruder autour de ladite carcasse métallique au moins une couche d'une composition comprenant du PEKK par extrusion tête d'équerre ; et
(c) poser une voûte autour de la structure obtenue ;
(d) poser une ou plusieurs nappes d'armures de traction ; et
(e) extruder autour de l'ensemble obtenu une gaine externe en polymère.

Lorsqu'il s'agit de fabriquer une conduite flexible de type « smooth bore », le procédé de l'invention comporte les étapes de :
(a) extruder au moins une couche d'une composition comprenant du PEKK par extrusion tête d'équerre ; et
(b) poser une voûte autour de la structure obtenue ;
(c) poser une ou plusieurs nappes d'armures de traction ; et
(d) extruder autour de l'ensemble obtenu une gaine externe en polymère.

D'autres caractéristiques et avantages du procède selon l'invention apparaitront à la lecture de la description détaillée donnée ci-après.

### [Description détaillée de l'invention]

Selon l'invention, il est proposé l'utilisation de certains poly(éthercétonecétone) (PEKK) pour la fabrication de pièces présentant une faible perméabilité aux gaz, et en particulier au CO₂ et/ou au H₂S.

### Le PEKK

Par « *PEKK* » on entend les polymères de type PAEK comportant des motifs de formules (-Ar-X-) ainsi que des motifs de formule (-Ar'-Y-), dans lesquelles :
- Ar et Ar' désignent chacun un radical aromatique divalent ;
- Ar et Ar' peuvent être choisis, de préférence, parmi le 1,3-phénylène, 1,4-phénylène, éventuellement substitués ;
- X désigne un groupe carbonyle ;
- Y désigne un groupe choisi parmi un atome d'oxygène.

Le poly-éther-cétone-cétone (PEKK) comporte une succession de motifs répétés de type -(Ar₁-O-Ar₂-CO-Ar₃-CO)ₙ-, chaque Ar₁, Ar₂ et Ar₃ représentant de manière indépendante un radical aromatique divalent, de préférence un phénylène.

Dans la formule ci-dessus, tout comme dans l'ensemble des formules qui suivent, n représente un nombre entier.

Les liaisons de part et d'autre de chaque motif Ar₁, Ar₂ et Ar₃ peuvent être de type para, ou méta, ou ortho (de préférence de type para ou méta).

Dans certains modes de réalisation, le PEKK comporte une succession de motifs répétés de formule (IA) et/ou de formule (IB) suivantes :

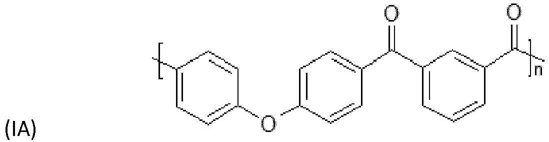

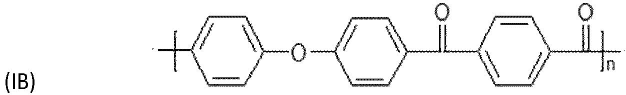

Les motifs de formule (IA) sont des motifs dérivés de l'acide isophtalique (ou motifs I), tandis que les motifs de formule (IB) sont des motifs dérivés de l'acide téréphtalique (ou motifs T).

Dans le PEKK utilisé dans l'invention, la proportion massique de motifs T par rapport à la somme des motifs T et I est de 35 à 100%. Cette proportion peut varier de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %.

Des gammes de 55 à 85 % et plus spécifiquement encore de 60 à 80 %, sont particulièrement appropriées. Dans l'ensemble des gammes énoncées dans la présente demande, les bornes sont incluses sauf mention contraire.

De préférence, le PEKK présente une viscosité inhérente de 0,4 à 1,5 dL/g, de préférence de 0,6 à 1,4 dL/g encore préféré de 0,8 à 1,2 dL/g dans de l'acide sulfurique à 96 %.

Le degré de cristallinité d'un polymère peut avoir un impact sur les propriétés de perméabilité aux gaz. Il a été en effet constaté que la perméabilité du PEKK aux gaz, notamment au CO₂ et au H₂S, diminue lorsque la cristallinité augmente. Aussi, il est préféré que le PEKK utilisé ait un degré de cristallinité maximum, de préférence supérieur à 5 %, en particulier supérieur à 15 % et tout particulièrement supérieur à 25 %. Dans le PEKK utilisé dans l'invention, la proportion massique de PEKK cristallin peut notamment varier de 0 à 1% ; ou de 1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 %.

Pour certaines applications, il peut être intéressant d'utiliser du PEKK amorphe. On désigne comme PEKK amorphe un PEKK sont l'enthalpie de fusion, telle que mesurée par DSC selon la norme ISO 11357-3 :1999, est inférieure à 10 J/g.

Le taux de cristallinité peut être mesuré par WAXS. A titre d'exemple, l'analyse peut être effectuée en diffusion des rayons X aux grands angles (WAXS), sur un appareil de type Nano-inXider^{®} avec les conditions suivantes :
- Longueur d'onde : raie principale Kα1 du cuivre (1,54 Angström).
- Puissance du générateur : 50 kV - 0.6 mA.
- Mode d'observation : transmission.
- Temps de comptage : 10 minutes.

On obtient ainsi un spectre de l'intensité diffusée en fonction de l'angle de diffraction. Ce spectre permet d'identifier la présence de cristaux, lorsque des pics sont visibles sur le spectre en plus du halo amorphe.

Dans le spectre, on peut mesurer l'aire des pics cristallins (notée AC) et l'aire du halo amorphe (notée AH). La proportion massique de PEKK cristallin dans le PEKK est alors estimée par le rapport (AC)/(AC +AH).

Le plus souvent, il est avantageux que la teneur de PEKK cristallin soit relativement élevée, par exemple supérieure ou égale à 5 %, ou supérieure ou égale à 10 %, ou encore supérieure ou égale à 15 %, afin de disposer de pièces ayant des performances mécaniques élevées. Un taux de cristallinité élevé a par ailleurs pour avantage de meilleures propriétés mécaniques y compris à température élevée, par exemple en termes de module ou de contrainte au seuil de plasticité.

En alternative, on peut calculer le degré de cristallinité à partir de l'enthalpie de fusion du PEKK mesurée par exemple par DSC, en la divisant par l'enthalpie de fusion d'un PEKK ayant un degré de cristallinité massique de 100%.

La résine de PEKK peut comprendre un ou plusieurs polymères additionnels appartenant ou pas à la famille des PAEK.

De préférence, la teneur massique en PEKK dans la résine de PEKK est supérieure ou égale à 50 %, de préférence supérieure ou égale à 60 %, en particulier supérieure ou égale à 70 %, de préférence supérieure ou égale à 80 % et encore préféré supérieure ou égale à 90 %. Dans certains modes de réalisation, la résine de PEKK consiste essentiellement en un ou plusieurs PEKK.

La résine peut comprendre des additifs tels que des charges et additifs fonctionnels. Ainsi, la résine peut comporter des charges de renfort, notamment des fibres continues, en particulier des fibres de carbone. Il est également possible de se dispenser de charges et/ou de se dispenser d'additifs fonctionnels.

En particulier, la résine peut comprendre un ou plusieurs phosphates ou sels de phosphate, pour améliorer la stabilité du PAEK à l'état fondu.

Selon l'invention, les pièces fabriqués en utilisant le PEKK présentant une faible perméabilité aux gaz, notamment au CO₂ et/ou au H₂S. Dans certaines applications telles que notamment le forage pétrolier sous-marin, il est nécessaire de disposer de conduites qui résistent et maintiennent ces propriétés dans les conditions sévères voire extrêmes de fonctionnement, de sorte à limiter la migration des espèces gazeuses et limiter la corrosion. Le plus souvent, ces conditions incluent une température de fonctionnement supérieure à 100°C, de préférence supérieure à 110°C, en particulier supérieure à 120°C et tout particulièrement supérieure à 130°C et/ou une pression supérieure à 10 bars, de préférence supérieure à 20 bars, en particulier supérieure à 30 bars et tout particulièrement supérieure à 40 bars, voire supérieure à 50 ou même à 100 bars.

Avantageusement la pièce présente une perméabilité au CO₂ à 130°C inférieure à 10 ·10⁻⁸, en particulier 5 ·10⁻⁸, notamment 1 ·10⁻⁸, de préférence 5 ·10⁻⁹ et en particulier inférieure à 1 ·10⁻⁹ cm³ CO₂ pour une épaisseur de 1 cm et une surface de 1 cm², par seconde et par bar de pression de CO₂, la quantité de CO₂ étant mesurée par GC.

Par ailleurs, la perméabilité de la pièce au H₂S à 130°C est de préférence inférieure à 10 ·10⁻⁸, en particulier 5 ·10⁻⁸, notamment 1 ·10⁻⁸, avantageusement 5 ·10⁻⁹, encore préféré inférieure à 1 ·10⁻⁹, en particulier inférieure à 5 ·10⁻¹⁰ et tout particulièrement inférieure à 1 ·10⁻¹⁰ cm³ de H₂S pour une épaisseur de 1 cm et une surface de 1 cm², par seconde et par bar de pression de H₂S, la quantité de H₂S étant mesurée par GC.

Selon un mode de réalisation, la pièce peut comporter deux ou plus de couches. Elle peut notamment associer au moins une couche comportant du PEKK avec au moins une couche en un matériau différent, notamment en PVDF, en polyamide, en polyéthylène, notamment en PE-RT, ou encore en matériau servant de liant afin d'assembler les couches respectives entre elles.

### Les conduites

Dans certains domaines techniques, notamment dans le forage pétrolier, on recherche des matériaux alliant une résistance à la température et aux produits chimiques à une faible perméabilité aux gaz, notamment aux composés acides CO₂ et H₂S. En effet, ces composés présents dans le pétrole sont acides et provoquent la corrosion des éléments métalliques. Aussi, l'utilisation de PEKK est spécialement intéressante pour la fabrication de pièces utilisées dans le transport des hydrocarbures, liquides et/ou gazeux, appelés ci-après effluents pétroliers.

Aussi, selon un deuxième aspect, l'invention concerne une conduite comprenant une couche destinée à être en contact avec l'effluent pétrolier, caractérisée en ce que ladite couche destinée à être en contact avec l'effluent pétrolier comprend du PEKK tel que défini à la revendication 6 et présente une perméabilité au CO₂ à 130°C inférieure à 10⁻⁸ cm³ de CO₂ pour une épaisseur de 1 cm et une surface de 1 cm², par seconde et par bar de pression de CO₂, et/ou une perméabilité au H₂S à 130°C de préférence inférieure à 10 ·10⁻⁸, en particulier 5 ·10⁻⁸, notamment 1 ·10⁻⁸, avantageusement 5 ·10⁻⁹, encore préféré 1 ·10⁻⁹, en particulier 5 ·10⁻¹⁰ et tout particulièrement 1 ·10⁻¹⁰ cm³ de H₂S pour une épaisseur de 1 cm et une surface de 1 cm², par seconde et par bar de pression de H₂S, la quantité de CO₂ et de H₂S étant mesurée par GC.

Ces conduites peuvent être utiles dans les installations de forage, pour le transport d'un effluent pétrolier, ou encore pour transporter d'autres mélanges comportant du CO₂ et/ou du H₂S dans des conditions de température et/ou de pression sévères.

Particulièrement visées sont les conduites destinées au transport des hydrocarbures, notamment des mélanges comportant au moins un composé gazeux acide, notamment un gaz choisi parmi le CO₂ et le H₂S.

Ces conduites peuvent avoir des structures différentes, selon leur usage spécifique et les contraintes associées.

Ainsi, les conduites peuvent être par exemple monocouches ou au contraire comporter deux, trois, quatre ou bien encore davantage de couches. Les conduites à plusieurs couches permettent notamment de faire supporter les contraintes mécaniques ou thermiques à des couches extérieures qui ne sont pas en contact avec les effluents pétroliers.

Généralement, la couche destinée à être en contact avec l'effluent pétrolier constitue la couche intérieure de la conduite. Néanmoins, l'invention englobe également le cas où cette couche se trouve en contact indirect avec les effluents pétroliers. Ainsi, selon un mode de réalisation de l'invention, la conduite comporte une couche intérieure étanche ou non étanche, par exemple une carcasse métallique, laquelle est entourée par une couche comportant du PEKK. Dans ce cas, l'effluent pétrolier passe au moins partiellement au travers la couche intérieure non étanche, et entre donc indirectement en contact avec la couche comprenant du PEKK.

Selon un mode de réalisation, la carcasse est entourée d'une membrane comportant du PEKK. Selon un autre mode de réalisation, la membrane est composée de plusieurs couches, et comporte outre une couche comportant du PEKK au moins une couche additionnelle en polymère différent, comme par exemple en PVDF, en polyamide, en polyéthylène, notamment en PE-RT ou encore en matériau servant de liant afin d'assembler les couches respectives entre elles.

Par exemple, ladite membrane multicouche peut comporter une couche comportant du PEKK et une couche à base de PVDF. Le PVDF est un matériau apprécié en raison notamment de sa flexibilité et de sa résistance chimique et sa résistance thermique (jusqu'à 280°C) mais sa perméabilité aux gaz le rend peu protecteur de la corrosion. Avantageusement, la couche de PVDF peut être disposée au contact de la carcasse et la couche comportant du PEKK à l'extérieur de celle-ci. D'autres couches peuvent être disposées entre ces deux couches formant la membrane.

Les couches composant la membrane peuvent être liées entre elles par exemple par accroche mécanique, c'est-à-dire par engagement d'aspérités présentes sur leurs surfaces respectives.

Ainsi, la conduite peut être de type désignée par le terme « rough bore ». Dans ce type de conduite, la couche destinée à être en contact avec l'effluent pétrolier peut constituer une gaine d'étanchéité entourant une carcasse métallique. La carcasse est formée d'une bande métallique enroulée de manière hélicoïdale servant à augmenter la résistance de la conduite par rapport à la pression externe. De telles conduites peuvent par ailleurs comporter une voûte, réalisée par exemple en fils métalliques agrafés, afin d'assurer la résistance à la pression interne dans la conduite, et des nappes d'armures de traction composées de fils métalliques enroulés en hélice selon un angle déterminé permettant notamment de conférer à la conduite une meilleure résistance à la traction.

En alternative, la conduite peut être de type désignée par le terme « smooth bore ». Ce type de conduite est dépourvu de carcasse métallique. L'effluent pétrolier peut être alors en contact direct avec la couche comprenant du PEKK. Dans les deux types de conduites, la couche destinée à être en contact avec l'effluent pétrolier peut contenir des fibres de renfort ou non. En tout état de cause, outre la faible perméabilité aux gaz, notamment au CO₂ et H₂S, le PEKK a comme avantage une excellente résistance à l'abrasion, notamment s'il est formulé avec d'autres agents, en particulier des fibres de renfort, notamment des fibres de carbone. Ainsi, une couche intérieure en PEKK résiste bien à l'abrasion due aux particules solides souvent présentes dans les effluents.

Le plus souvent, les conduites selon l'invention comportent en outre, comme expliqué plus haut pour les conduites de type « rough bore » au moins une couche de renfort mécanique formant armature, afin de résister à la pression extérieure et intérieure. Cependant, il existe également les flexibles composés exclusivement de polymères thermoplastiques comme celles commercialisées par la société Airborne. Dans ces conduites, les couches de renfort et éventuelles armatures métalliques sont remplacées par des renforcements composés de composites thermoplastiques.

La au moins une couche de renfort mécanique peut être réalisée en métal. Dans ce cas, il peut s'agir d'un tube en métal ou, afin de conférer plus de flexibilité, d'un enroulement de fils métalliques ou de tissé métallique.

En alternative, la couche de renfort mécanique peut être réalisée en matériau composite. De préférence, le matériau composite est composé d'un polymère renforcé par des charges de renfort. De préférence, le polymère est un polymère thermoplastique haute performance, par exemple un polymère de la famille des polyamides, polyéthylène, notamment PE-RT, PVDF, des PAEK, notamment choisi parmi le PEKK et/ou le PEEK. Dans le composite, le polymère est renforcé par des charges de renfort, notamment des fibres, notamment des fibres de carbone ou des fibres d'aramide ou des fibres de verre. Une telle couche de renfort mécanique comprenant du PEKK peut par ailleurs remplacer la carcasse métallique ainsi que la voûte, le cas échéant, pour donner une conduite flexible dite « smooth bore ».

Selon un mode de réalisation, la conduite comporte en outre une armature extérieure flexible. Selon un autre mode de réalisation, la conduite comporte en outre une armature extérieure rigide.

La couche destinée à être en contact avec l'effluent pétrolier peut notamment se présenter sous la forme d'un tube, d'une gaine ou d'une couche de pression ou encore d'un revêtement intérieur. Le revêtement intérieur peut être en particulier un liner destiné à être inséré dans des conduites notamment métalliques en vue de leur réhabilitation.

Selon un troisième aspect, l'invention vise un procédé de fabrication des conduites telles que décrites ci-dessus.

En particulier, lorsque la couche destinée à être en contact avec l'effluent pétrolier se présente sous forme de tube ou de gaine, elle peut être obtenue par exemple par extrusion ou coextrusion. Lorsque la couche est sous la forme d'un revêtement intérieur, elle peut être obtenue par exemple par poudrage.

Une pièce composée de plusieurs couches telle que décrite ci-dessus peut être obtenue également par extrusion-gainage ou encore par enroulement de bandes et soudure subséquente. Dans ce cas, on désigne la couche destinée à être en contact avec l'effluent pétrolier aussi comme gaine ou couche de pression.

Plus spécifiquement, lorsqu'il s'agit de fabriquer ou réhabiliter une conduite rigide, le procédé de l'invention comporte les étapes de :
(a) préparer un tube comprenant du PEKK de taille appropriée ; et
(b) insérer ledit tube à l'intérieur d'un tube métallique pour former un liner.

Selon un mode de réalisation, le tube comportant du PEKK peut comprendre en outre une ou plusieurs couches additionnelles, par exemple en PVDF, en polyamide, en PE-RT ou encore en matériau servant de liant afin d'assembler les couches respectives entre elles.

Lorsqu'il s'agit de fabriquer une conduite flexible de type « rough bore », le procédé de l'invention comporte les étapes de :
(a) fournir une carcasse métallique;
(b) extruder autour de ladite carcasse métallique au moins une couche d'une composition comprenant du PEKK par extrusion tête d'équerre; et
(c) poser une voûte autour de la structure obtenue ;
(d) poser une ou plusieurs nappes d'armures de traction ; et
(e) extruder autour de l'ensemble obtenu une gaine externe en polymère.

Il est possible d'extruder avant l'étape (b) une ou plusieurs autres couches sur la carcasse métallique, notamment une couche à base de PVDF, en polyamide, en polyéthylène, notamment en PE-RT ou encore en matériau servant de liant afin d'assembler les couches respectives entre elles.

Lorsqu'il s'agit de fabriquer une conduite flexible de type « smooth bore », le procédé de l'invention comporte les étapes de :
a) extruder au moins une couche d'une composition comprenant du PEKK par extrusion tête d'équerre ; et
b) poser une voûte autour de la structure obtenue ;
c) poser une ou plusieurs nappes d'armures de traction ; et
d) extruder autour de l'ensemble obtenu une gaine externe en polymère.

Il est possible d'extruder pendant l'étape (a) une ou plusieurs autres couches, notamment à base de PVDF, en polyamide, en polyéthylène, notamment en PE-RT ou encore en matériau servant de liant afin d'assembler les couches respectives entre elles.

L'invention sera décrite plus en détail dans les exemples non limitatifs ci-après.

### [Exemples]

### Exemple 1 Perméabilité de PEKK

La perméabilité du PEKK aux gaz, et notamment au CO₂ et H₂S jouant un rôle particulièrement important dans des applications pétrolières, on a préparé par injection une plaque de PEKK (KEPSTAN^{®} 7002 commercialisé par ARKEMA France, ratio T :I = 70 : 30) de dimensions 100 mm x 100 mm x 2mm. On a également préparé par extrusion de bandes, puis usinage aux dimensions désirées, une plaque de PEKK KEPSTAN^{®} 8002 (commercialisé par ARKEMA France, ratio T :I = 80 : 20) de dimensions 100 mm x100 mm x2mm.

La cristallinité du PEKK dans la plaque injectée a été caractérisée par mesure de l'enthalpie de fusion par calorimétrie différentielle à balayage (DSC). Ceci a également été réalisé pour la plaque extrudée. Par comparaison avec l'enthalpie théorique d'une cristallisation à 100%, on peut en obtenir le degré de cristallinité du PEKK dans la plaque injectée et la plaque extrudée.

Puis, la perméabilité de la plaque injectée au CO₂ dans des conditions sévères a été évaluée en plaçant des disques de 90mm de diamètre usinés dans la plaque dans une cellule de perméation chauffée (T=130°C). Le même essai a été réalisé pour la plaque extrudée, sur des disques de 70 mm de diamètre.

La cellule de perméation est alimentée par un gaz entrant (ici, le CO₂) sous une pression déterminée qui vient au contact d'une face de la plaque du matériau à tester. Un système de compresseur permet de contrôler la pression du gaz entrant (ici, 40 bars). De l'autre côté de la plaque, un gaz vecteur (ici, l'azote) entraine le gaz ayant perméé au travers la plaque vers un détecteur (ici un chromatographe en phase gazeuse (GC)) où il est quantifié. A partir de la quantité de gaz perméee mesurée, on calcule la perméabilité, en tenant compte de la surface de la plaque, de la différence de pression partielle en gaz perméant, du temps de mesure et de l'épaisseur de la plaque.

Le calcul de la perméabilité se fait en régime stationnaire, lequel fait suite au régime transitoire qui reflète le temps nécessaire aux molécules de gaz perméant de diffuser à travers la plaque. On considère qu'on est en régime stationnaire lorsque le flux de CO₂ mesuré n'augmente pas de plus de 1% entre deux prélèvements espacés de 24 h. A titre d'exemple, dans le cas des plaques étudiées, 10 jours ont été nécessaires au total pour réaliser la mesure de la perméabilité.

Les résultats sont rassemblés dans le tableau 1 ci-dessous.

La perméabilité du PEKK au H₂S a été évaluée comme décrit ci-dessus pour le CO₂ mais en utilisant une plaque de Kepstan^{®} 7002 d'une épaisseur de 0.5 mm (usinée sous forme de disque de 70mm de diamètre), à la place d'une plaque 2mm et sous une pression de 15 bars.

Les résultats sont rassemblés dans le tableau 2 ci-dessous.

Par ailleurs, on a préparé des films amorphes d'une épaisseur de 50µm par extrusion calandrage en PEKK KEPSTAN^{®} 7002 (commercialisé par ARKEMA France, ratio T :I = 70 : 30). Ces films ont été cristallisés par traitement thermique au four à 210°C pendant 40 min. Des disques de 50 cm² ont été prélevés dans ces deux films (amorphes et cristallins) et utilisés pour mesurer la perméabilité aux gaz CO₂, O₂, N₂ et CH₄. Les mesures ont été réalisées en cellule de perméation comme expliqué ci-dessus, mais à température ambiante et pression atmosphérique.

Les résultats sont rassemblés dans le tableau 3 ci-dessous.

### Exemple 2 (de comparaison) Perméabilité de PEEK

Afin de comparer les propriétés du PEKK avec celles du PEEK, on a répété l'exemple 1 en utilisant cette fois une plaque injectée de PEEK de 2 mm d'épaisseur (450G commercialisé par VICTREX).

La perméabilité au H₂S a été évaluée comme décrit ci-dessus pour le CO₂ mais en utilisant une plaque de PEEK (450G commercialisé par VICTREX) injectée de 0.5 mm d'épaisseur (ensuite usinée sous forme de disques de 70mm), sous une pression de 15 bars.

Les résultats sont rassemblés dans les tableaux 1 et 2 ci-dessous.

Par ailleurs, des disques de 70 mm de diamètre ont été prélevés dans des films de PEEK 450G de 50µm mis en oeuvre par extrusion calandrage (extrudés amorphes et également cristallisés à 205°C pendant des temps supérieurs à 1H) et utilisés pour mesurer la perméabilité aux gaz CO₂, O₂, N₂ et CH₄. Les mesures ont été réalisées en cellule de perméation comme expliqué ci-dessus, mais à température ambiante et pression atmosphérique.

Les résultats sont rassemblés dans le tableau 3 ci-dessous.

On constate à partir des résultats que le PEKK a une perméabilité au CO₂ dans des conditions sévères de température et de pression nettement supérieure au PEEK. Cette constatation est d'autant plus surprenante dans la mesure où le PEEK présente un degré de cristallinité plus élevé que le PEKK. En effet, l'enthalpie de fusion de la plaque de PEEK est supérieure à celle de la plaque de PEKK.

**Tableau 1 : Perméabilité au CO₂**

| **Polymère** | **Enthalpie de fusion [J/g]** | **Température [°C]** | **Pression [bars]** | **Perméabilité [cm³/cm·s·bar]** | **Coefficient de diffusion [cm²/s]** |
|---|---|---|---|---|---|
| PEKK KEPSTAN^{®} 7002 | 32 | 130 | 40 | 6.1 ·10⁹ | 3.6 ·10⁻⁸ |
| PEKK KEPSTAN^{®} 8002 | 39 | 130 | 40 | 7.5 ·10⁻⁹ | 4.7 ·10⁻⁸ |
| PEEK 450G | 46 | 130 | 40 | 15 ·10⁻⁹ | 9.5 ·10⁻⁸ |

Concernant la perméabilité du H₂S, on constate de la même façon une nette supériorité du PEKK comparé au PEEK, puisqu'on observe que la perméabilité du PEKK est 2.8 fois plus faible comparée à la perméabilité du PEEK.

**Tableau 2 : Perméabilité au H₂S**

| **Polymère** | **Température [°C]** | **Pression [bars]** | **Perméabilité [cm³/cm·s·bar]** | **Coefficient de diffusion [cm²/s]** |
|---|---|---|---|---|
| PEKK* | 130 | 15 | 6.5 ·10⁻⁹ | 8.0 ·10⁻⁹ |
| PEEK* | 130 | 15 | 1.8 ·10⁻⁸ | 2.0 ·10⁻⁸ |

| | | | | |
|---|---|---|---|---|
| * mesuré sur une plaque de 0.5 mm d'épaisseur | | | | |

On constate également que les films en PEKK cristallisés sont nettement meilleurs en propriétés barrière vis-à-vis de tous les gaz testés comparé aux films PEEK cristallisés. De la même manière, les films PEKK amorphes sont meilleurs en propriétés barrière comparés aux films PEEK amorphes.

Des essais font par ailleurs apparaître que même sous forme amorphe, le PEKK présente un comportement barrière aux gaz CO₂, O₂, N₂ et CH₄ meilleur que le PEEK cristallisé.

**Tableau 3 : Perméabilité de films PEKK et PEEK**

| **Polymère** | **Cristallisé/ amorphe** | **Perméabilité [cm³·50µm/m²·24h·atm]** | | | |
|---|---|---|---|---|---|
| | | CO₂ | O₂ | N₂ | CH₄ |
| PEKK KEPSTAN^{®} 7002 | cristallisé | 140 | 80 | 10 | 7 |
| PEEK 450G | cristallisé | 840 | 180 | 30 | 20 |
| PEKK KEPSTAN^{®} 7002 | Amorphe | 645 | 170 | ND | 12 |
| PEEK 450G | amorphe | 1790 | 345 | ND | 40 |

Ces résultats démontrent qu'à épaisseur égale, l'utilisation de PEKK dans des conduites pour le transport d'effluents pétrolier permet une meilleure protection des éléments métalliques de la corrosion induite par la migration de gaz tels que le CO₂ et le H₂S. Par ailleurs, aux fins d'atteindre une perméabilité cible, l'utilisation de PEKK permet de réduire l'épaisseur des gaines et de ce fait réduire le poids de la conduite.

## Revendications

1. Utilisation de PEKK pour diminuer la perméabilité de CO₂ et de H₂S d'une pièce destinée à entrer en contact avec un effluant pétrolier, dans laquelle le PEKK présente une proportion massique de motifs T de formule (IB) 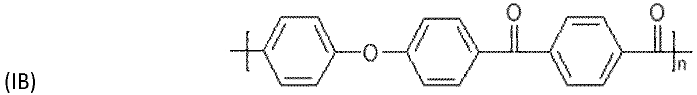 par rapport à la somme des motifs T et les motifs I de formule (IA) ci-dessous 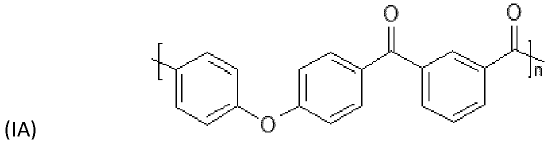 de 35 à 100%.

2. Utilisation selon la revendication 1 dans laquelle le PEKK présente un degré de cristallinité massique supérieur à 5%, déterminé comme indiqué dans la description.

3. Utilisation selon la revendication 1 ou 2 dans laquelle le PEKK présente une proportion massique de motifs T par rapport à la somme des motifs T et I de 55 à 85 % et plus spécifiquement de 60 à 80 %.

4. Utilisation selon l'une des revendications précédentes, dans laquelle la perméabilité au CO₂ à 130°C est inférieure à 10 ·10⁻⁹ cm³ de CO₂ pour une épaisseur de 1 cm et une surface de 1 cm², par seconde et par bar de pression de CO₂, et /ou une perméabilité au H₂S à 130°C inférieure à 10⁻⁸ cm³ pour une épaisseur de 1 cm et une surface de 1 cm², par seconde et par bar de pression de H₂S, la quantité de CO₂ et H₂S étant mesurée par GC, respectivement.

5. Utilisation selon l'une des revendications précédentes, dans laquelle la pièce est choisie parmi un tube, une gaine, une couche de pression et un revêtement intérieur, notamment destinés au transport d'un effluent pétrolier.

6. Conduite pour le transport d'un effluent pétrolier, comprenant une couche destinée à être en contact avec l'effluent pétrolier, **caractérisée en ce que** ladite couche destinée à être en contact avec l'effluent pétrolier comprend du PEKK présentant une proportion massique de motifs T de formule (IB) 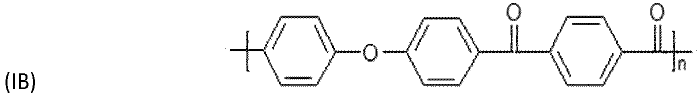 par rapport à la somme des motifs T et les motifs I de formule (IA) ci-dessous 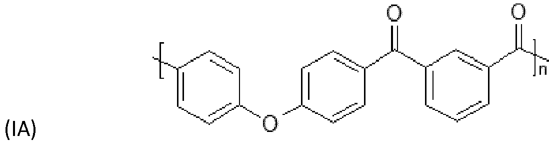 de 35 à 100% et présente une perméabilité au CO₂ à 130°C inférieure à 10 ·10⁻⁹ cm³ de CO₂ pour une épaisseur de 1 cm et une surface de 1 cm², par seconde et par bar de pression de CO₂, et /ou une perméabilité au H₂S à 130°C inférieure à 10⁻⁸ cm³ pour une épaisseur de 1 cm et une surface de 1 cm², par seconde et par bar de pression de H₂S, la quantité de CO₂ et H₂S étant mesurée par GC, respectivement.

7. Conduite selon la revendication 6, dans laquelle ladite couche destinée à être en contact avec l'effluent pétrolier est une gaine d'étanchéité entourant une carcasse métallique.

8. Conduite selon les revendications 6 ou 7, dans laquelle ladite couche destinée à être en contact avec l'effluent pétrolier est dépourvue de fibres de renfort.

9. Conduite selon l'une des revendications 6 à 8, dans laquelle ladite couche destinée à être en contact avec l'effluent pétrolier est entourée d'au moins une couche de renfort mécanique.

10. Conduite selon la revendication 9, dans laquelle la au moins une couche de renfort mécanique est réalisée en métal.

11. Conduite selon la revendication 9, dans laquelle la au moins une couche de renfort mécanique est réalisée en matériau composite.

12. Conduite selon la revendication 11, dans laquelle le matériau composite comprend du PEKK et des fibres de carbone.

13. Conduite selon l'une des revendications 6 à 12, comportant en outre une armature métallique rigide.

14. Conduite selon l'une des revendications 6 à 13, comportant en outre une armature métallique flexible.

15. Procédé de fabrication ou de réhabilitation d'une conduite selon la revendication 13, comprenant les étapes de :
a. préparer un tube comprenant du PEKK de taille appropriée ; et
b. insérer ledit tube à l'intérieur d'un tube métallique pour former un liner.

16. Procédé de fabrication d'une conduite selon la revendication 14, comprenant les étapes de :
a. fournir une carcasse métallique ;
b. extruder autour de ladite carcasse métallique au moins une couche d'une composition comprenant du PEKK par extrusion tête d'équerre ; et
c. poser une voûte autour de la structure obtenue ;
d. poser une ou plusieurs nappes d'armures de traction ; et
e. extruder autour de l'ensemble obtenu une gaine externe en polymère.

17. Procédé de fabrication d'une conduite selon la revendication 14, le procédé de l'invention comporte les étapes de :
a. extruder au moins une couche d'une composition comprenant du PEKK par extrusion tête d'équerre ; et
b. poser une voûte autour de la structure obtenue ;
c. poser une ou plusieurs nappes d'armures de traction ; et
d. extruder autour de l'ensemble obtenu une gaine externe en polymère.

## Patentansprüche

1. Verwendung von PEKK zur Verringerung der CO₂- und H₂S-Durchlässigkeit eines Teils, das dazu bestimmt ist, mit einem Erdölstrom in Kontakt zu gelangen, wobei das PEKK einen Massenanteil an Struktureinheiten T mit der Formel (IB) 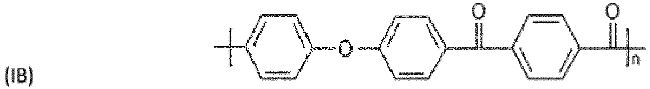 in Bezug auf die Summe aus den Struktureinheiten T und den Struktureinheiten I mit der untenstehenden Formel (IA) 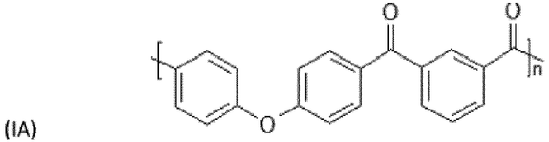 von 35 bis 100 % aufweist.

2. Verwendung nach Anspruch 1, bei der das PEKK einen wie in der Beschreibung angegebenen ermittelten massenbezogenen Kristallinitätsgrad von mehr als 5 % aufweist.

3. Verwendung nach Anspruch 1 oder 2, bei der das PEKK einen Massenanteil an Struktureinheiten T in Bezug auf die Summe aus den Struktureinheiten T und I von 55 bis 85 % und insbesondere von 60 bis 80 % aufweist.

4. Verwendung nach einem der vorhergehenden Ansprüche, bei der die CO₂-Durchlässigkeit bei 130 °C weniger als 10·10⁻⁹ cm³ CO₂ bei einer Dicke von 1 cm und einer Fläche von 1 cm² je Sekunde und je bar CO₂-Druck beträgt und/oder eine H₂S-Durchlässigkeit bei 130 °C weniger als 10⁻⁸ cm³ bei einer Dicke von 1 cm und einer Fläche von 1 cm² je Sekunde und je bar H₂S-Druck beträgt, wobei die CO₂- und H₂S-Menge jeweils durch GC gemessen wird.

5. Verwendung nach einem der vorhergehenden Ansprüche, bei der das Teil unter einem Rohr, einer Ummantelung, einer Druckschicht und einer Innenauskleidung gewählt ist, die insbesondere für den Transport eines Erdölstroms bestimmt sind.

6. Leitung für den Transport eines Erdölstroms, umfassend eine Schicht, die dazu bestimmt ist, mit dem Erdölstrom in Kontakt zu gelangen, **dadurch gekennzeichnet, dass** die Schicht, die dazu bestimmt ist, mit dem Erdölstrom in Kontakt zu gelangen, PEKK umfasst, das einen Massenanteil an Struktureinheiten T mit der Formel (IB) 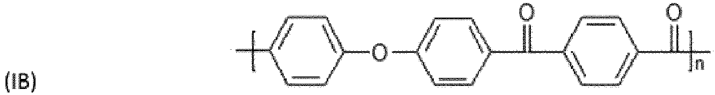 in Bezug auf die Summe aus den Struktureinheiten T und den Struktureinheiten I mit der untenstehenden Formel (IA) 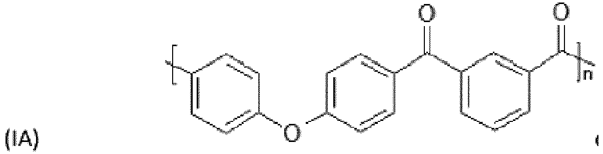 von 35 bis 100 % aufweist und eine CO₂-Durchlässigkeit bei 130 °C von weniger als 10·10⁻⁹ cm³ CO₂ bei einer Dicke von 1 cm und einer Fläche von 1 cm² je Sekunde und je bar CO₂-Druck und/oder eine H₂S-Durchlässigkeit bei 130 °C von weniger als 10⁻⁸ cm³ bei einer Dicke von 1 cm und einer Fläche von 1 cm² je Sekunde und je bar H₂S-Druck aufweist, wobei die CO₂- und H₂S-Menge jeweils durch GC gemessen wird.

7. Leitung nach Anspruch 6, bei der die Schicht, die dazu bestimmt ist, mit dem Erdölstrom in Kontakt zu gelangen, eine Abdichtungsummantelung ist, die eine Metallkarkasse umgibt.

8. Leitung nach den Ansprüchen 6 oder 7, bei der die Schicht, die dazu bestimmt ist, mit dem Erdölstrom in Kontakt zu gelangen, keine Verstärkungsfasern enthält.

9. Leitung nach einem der Ansprüche 6 bis 8, bei der die Schicht, die dazu bestimmt ist, mit dem Erdölstrom in Kontakt zu gelangen, von mindestens einer Schicht zur mechanischen Verstärkung umgeben ist.

10. Leitung nach Anspruch 9, bei der die mindestens eine Schicht zur mechanischen Verstärkung aus Metall ausgeführt ist.

11. Leitung nach Anspruch 9, bei der die mindestens eine Schicht zur mechanischen Verstärkung aus Verbundwerkstoff ausgeführt ist.

12. Leitung nach Anspruch 11, bei welcher der Verbundwerkstoff PEKK und Kohlenstofffasern umfasst.

13. Leitung nach einem der Ansprüche 6 bis 12, beinhaltend ferner eine starre metallische Armierung.

14. Leitung nach einem der Ansprüche 6 bis 13, beinhaltend ferner eine flexible metallische Armierung.

15. Verfahren zur Herstellung oder Sanierung einer Leitung nach Anspruch 13, umfassend die folgenden Schritte:
a. Herstellen eines PEKK umfassenden Rohrs von geeigneter Größe; und
b. Einführen des Rohrs in den Innenraum eines Metallrohrs, um einen Liner zu bilden.

16. Verfahren zur Herstellung einer Leitung nach Anspruch 14, umfassend die folgenden Schritte:
a. Bereitstellen einer Metallkarkasse;
b. Extrudieren mindestens einer Schicht aus einer PEKK umfassenden Zusammensetzung durch Querspritzkopf-Extrusion um die Metallkarkasse herum; und
c. Anbringen eines Gewölbes um die erhaltene Struktur herum;
d. Anbringen einer oder mehrerer Zugarmierungslagen; und
e. Extrudieren einer Außenummantelung aus Polymer um die erhaltene Anordnung herum.

17. Verfahren zur Herstellung einer Leitung nach Anspruch 14, das Verfahren der Erfindung beinhaltet die folgenden Schritte:
a. Extrudieren mindestens einer Schicht aus einer PEKK umfassenden Zusammensetzung durch Querspritzkopf-Extrusion; und
b. Anbringen eines Gewölbes um die erhaltene Struktur herum;
c. Anbringen einer oder mehrerer Zugarmierungslagen; und
d. Extrudieren einer Außenummantelung aus Polymer um die erhaltene Anordnung herum.

## Claims

1. Use of PEKK for lowering the CO₂ and H₂S permeability of a part intended to be in contact with a petroleum effluent, wherein the PEKK has a proportion by mass of T units of formula (IB) 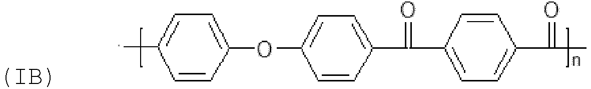 relative to the sum of the T units and the I units of formula (IA) below 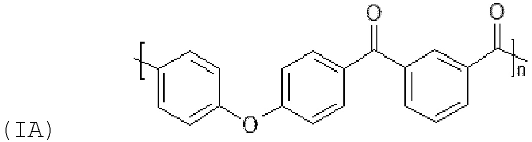 of 35% to 100%.

2. Use according to Claim 1, wherein the PEKK has a degree of crystallinity by mass of greater than 50, determined as indicated in the description.

3. Use according to Claim 1 or 2, wherein the PEKK has a proportion by mass of T units relative to the sum of the T and I units of 55% to 85% and more specifically of 60% to 80%.

4. Use according to one of the preceding claims, wherein the CO₂ permeability at 130°C is less than 10 · 10⁻⁹ cm³ of CO₂ for a thickness of 1 cm and a surface area of 1 cm², per second and per bar of CO₂ pressure, and/or an H₂S permeability at 130°C is less than 10⁻⁸ cm³ for a thickness of 1 cm and a surface area of 1 cm², per second and per bar of H₂S pressure, the amount of CO₂ and H₂S being measured by GC, respectively.

5. Use according to one of the preceding claims, wherein the part is selected from a tube, a sheath, a pressure layer and an interior coating, especially intended for transporting a petroleum effluent.

6. Pipe for transporting a petroleum effluent, comprising a layer intended to be in contact with the petroleum effluent, **characterized in that** said layer intended to be in contact with the petroleum effluent comprises PEKK having a proportion by mass of T units of formula (IB) 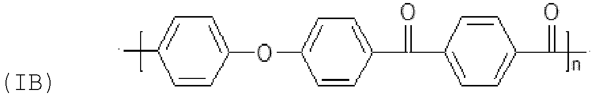 relative to the sum of the T units and the I units of formula (IA) below 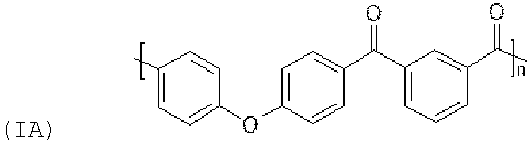 of 35% to 100% and has a CO₂ permeability at 130°C of less than 10 · 10⁻⁹ cm³ of CO₂ for a thickness of 1 cm and a surface area of 1 cm², per second and per bar of CO₂ pressure, and/or an H₂S permeability at 130°C of less than 10⁻⁸ cm³ for a thickness of 1 cm and a surface area of 1 cm², per second and per bar of H₂S pressure, the amount of CO₂ and H₂S being measured by GC, respectively.

7. Pipe according to Claim 6, wherein said layer intended to be in contact with the petroleum effluent is a sealing sheath surrounding a metal carcass.

8. Pipe according to Claim 6 or 7, wherein said layer intended to be in contact with the petroleum effluent is devoid of reinforcing fibres.

9. Pipe according to one of Claims 6 to 8, wherein said layer intended to be in contact with the petroleum effluent is surrounded by at least one mechanical reinforcement layer.

10. Pipe according to Claim 9, wherein the at least one mechanical reinforcement layer is made of metal.

11. Pipe according to Claim 9, wherein the at least one mechanical reinforcement layer is made of composite material.

12. Pipe according to Claim 11, wherein the composite material comprises PEKK and carbon fibres.

13. Pipe according to one of Claims 6 to 12, further comprising a rigid metal armature.

14. Pipe according to one of Claims 6 to 13, further comprising a flexible metal armature.

15. Method for manufacturing or renovating a pipe according to Claim 13, comprising the steps of:
a. preparing a tube comprising PEKK of appropriate size; and
b. inserting said tube inside a metal tube to form a liner.

16. Method for manufacturing a pipe according to Claim 14, comprising the steps of:
a. providing a metal carcass;
b. extruding around said metal carcass at least one layer of a composition comprising PEKK by crosshead extrusion; and
c. installing a vault around the resulting structure;
d. installing one or more tensile armour plies; and
e. extruding an external polymer sheath around the resulting assembly.

17. Method for manufacturing a pipe according to Claim 14, the method of the invention comprises the steps of:
a. extruding at least one layer of a composition comprising PEKK by crosshead extrusion; and
b. installing a vault around the resulting structure;
c. installing one or more tensile armour plies; and
d. extruding an external polymer sheath around the resulting assembly.
